Europäisches Patentamt

European Patent Office

Office européen des brevets

(11) Numéro de publication: **0 476 592 A2**

# DEMANDE DE BREVET EUROPEEN

(21) Numéro de dépôt: **91115761.8**

(22) Date de dépôt: **17.09.91**

(51) Int. Cl.5: **G06F 9/355**

(30) Priorité: **19.09.90 FR 9011560**

(43) Date de publication de la demande:
**25.03.92 Bulletin 92/13**

(84) Etats contractants désignés:
**AT BE CH DE DK ES FR GB GR IT LI LU NL SE**

(71) Demandeur: **ALCATEL RADIOTELEPHONE**
**10, rue de la Baume**
**F-75008 Paris(FR)**

(72) Inventeur: **Rousseau, Emmanuel**
**22 rue Jean Mermoz**
**F-75008 Paris(FR)**
Inventeur: **Chateau, Alain**
**16 sente de la Tour Fine**
**F-95220 Herblay(FR)**

(74) Mandataire: **Weinmiller, Jürgen et al**
**Lennéstrasse 9 Postfach 24**
**W-8133 Feldafing(DE)**

(54) **Générateur d'adresses pour la mémoire de données d'un processeur.**

(57) La présente invention concerne un générateur d'adresses pour la mémoire de données d'un processeur.

Le générateur d'adresses (GA) pour la mémoire de données (RAM) d'un processeur, reçoit un mot de commande (MC) d'un contrôleur de de programme (CP), ce contrôleur de programme recevant lui-même des instructions (I) provenant d'une mémoire de programme (ROM) adressée par un compteur d'instructions (CI) et produisant un signal de programme (P) à destination d'une unité arithmétique et logique (ALU), le compteur d'instructions étant incrémenté par un signal d'horloge (Ck) et initialisé par le contrôleur de programme, et se caractérise en ce que, le mot de commande (MC) comprenant une information d'emplacement (IE) et une information de sélection (IS), il comprend des moyens pour produire une adresse de donnée (AD) composée d'une première partie comprenant des bits de l'infor- mation d'emplacement (IE) et d'une deuxième partie formée d'un ensemble sélectionné de bits de l'adresse de l'instruction courant (AI) identifiés par l'information de sélection (IS).

FIG.2

EP 0 476 592 A2

La présente invention concerne un générateur d'adresses pour la mémoire de données d'un processeur.

Les systèmes électroniques programmables comprennent un processeur qui exécute des instructions fournies par un contrôleur de programme généralement inclus dans ce processeur. Les instructions entraînent ou commandent fréquemment des opérations produisant des données de sorties à destination d'une mémoire de données à partir de données d'entrées éventuellement enregistrées, elles aussi, dans cette mémoire. L'adresse de l'emplacement de la mémoire de données correspondant à une instruction déterminée est fournie par un générateur d'adresses.

Une première technique connue d'adressage de la mémoire de données est l'adressage direct. Dans ce cas, l'adresse est délivrée directement dans l'instruction fournie par le contrôleur de programme.

Il est couramment admis que cette technique, si elle est d'une grande simplicité, elle présente par contre de grandes limitations sur le plan de la souplesse d'adressage. Il s'ensuit que l'exécution d'une tâche donnée par le processeur nécessite fréquemment un nombre élevé d'instructions.

Une deuxième technique connue est l'adressage indirect. Dans ce cas l'adresse est calculée par un générateur d'adresse à partir de l'instruction donnée par le contrôleur de programme. Cette technique permet une grande souplesse quant à l'organisation de la mémoire. Le générateur comprend des circuits fonctionnant au rythme d'un signal d'horloge et des circuits combinatoires incorporant un grand nombre de cellules qu'il s'agisse, par exemple, de registres ou d'unité arithmétique et logique, sa taille est donc relativement importante.

La présente invention a ainsi pour objet un générateur d'adresse permettant un type d'adressage intermédiaire entre l'adressage direct et l'adressage indirect qui, s'il n'offre pas la même souplesse que ce dernier, présente une taille réduite et par conséquent un coût moins élevé.

Le générateur d'adresses pour la mémoire de données d'un processeur selon l'invention reçoit un mot de commande d'un contrôleur de programme, ce contrôleur de programme recevant lui-même des instructions provenant d'une mémoire de programme adressée par un compteur d'instructions et produisant un signal de programme à destination d'une unité arithmétique et logique, le compteur d'instructions étant incrémenté par un signal d'horloge et initialisé par le contrôleur de programme et se caractérise en ce que le mot de commande comprenant une information d'emplacement et une information de sélection, il comprend des moyens pour produire une adresse de données composée d'une première partie comprenant des bits de l'information d'emplacement et d'une deuxième partie formée d'un ensemble sélectionné de bits de l'adresse de l'instruction courante identifiés par l'information de sélection.

De plus, dans le générateur d'adresses pour la mémoire de données d'un processeur, l'information de sélection comprend un code d'étendue précisant le nombre variable e de bits de la deuxième partie.

Dans un mode de réalisation particulier, le générateur d'adresses pour la mémoire de données d'un processeur comprend un premier groupe de multiplexeurs recevant chacun sur sa première entrée un bit sélectionné de l'information d'emplacement et sur sa deuxième entrée un bit sélectionné de l'adresse de l'instruction courante, le nième de ces multiplexeurs, quel que soit n, étant positionné sur sa première entrée si n est supérieur à e ou sur sa deuxième entrée dans le cas contraire, la deuxième partie de l'adresse de donnée étant établie avec les signaux de sortie des multiplexeurs de rang inférieur ou égal à e, et la première partie de cette adresse étant établie à partir des bits non sélectionnés de l'information d'emplacement et avec les signaux de sortie des multiplexeurs de rang supérieur à e.

Ainsi, le générateur d'adresses pour la mémoire de données d'un processeur comprend un organe de décodage produisant des signaux de sélection pour commander ces multiplexeurs à partir du code d'étendue.

Avantageusement, dans le générateur d'adresses pour la mémoire de données d'un processeur, un ensemble d'indexation comprenant certains au moins des bits de l'adresse de l'instruction courante affectés chacun d'un numéro d'ordre, l'information de sélection comprend également un code opératoire précisant que la deuxième partie de l'adresse de données est composée des bits de cet ensemble d'indexation de numéro d'ordre supérieur ou égal à un nombre f.

Selon une caractéristique additionnelle, le générateur d'adresses pour la mémoire de données d'un processeur comprend un deuxième groupe de multiplexeurs dont le nième, quel que soit n, reçoit sur son entrée de rang k le bit de numéro d'ordre (n + k-1) de l'ensemble d'indexation, a sa sortie reliée à la deuxième entrée du nième multiplexeur du premier groupe, tous les multiplexeurs du deuxième groupe étant positionnés sur leur entrée de rang f au moyen du code opératoire.

Dans une forme privilégiée du générateur d'adresses pour la mémoire de données d'un processeur, la deuxième partie de l'adresse de données représente les bits de poids faible de cette adresse.

Par ailleurs, dans le générateur d'adresses pour la mémoire de données d'un processeur, la deuxième partie de l'adresse de donnée est formée par des bits consécutifs de l'adresse de l'instruction courante.

Une première application du générateur d'adresses pour la mémoire de données d'un processeur concerne l'adressage incrémentiel d'une donnée affectée de cette adresse de donnée au cours de la répétition d'une boucle de $2^p$ instructions, la deuxième partie de l'adresse de donnée étant incrémentée d'une unité à chaque exécution de cette boucle et étant composée de bits de poids supérieur ou égal à p de l'adresse de l'instruction courante.

Une deuxième application du générateur d'adresses pour la mémoire de données d'un processeur concerne l'adressage modulaire d'une donnée affectée de cette adresse de donnée au cours de la répétition d'une boucle de $2^p$ instructions, la deuxième partie de l'adresse de données étant incrémentée de $2^q$ unités à chaque exécution de cette boucle où q est inférieur à p, et étant composée de bits de poids supérieur ou égal à (p-q) de l'adresse de l'instruction courante.

Une troisième application du générateur d'adresses pour la mémoire de données d'un processeur concerne l'adressage circulaire incrémentiel d'une donnée affectée de cette adresse de donnée au cours de la répétition d'une boucle de $2^p$ instructions r fois, la deuxième partie de l'adresse de donnée étant égale au nombre d'exécutions déjà effectuées de cette boucle modulo un nombre déterminé $2^s$, r étant le produit d'un nombre entier u et de $2^s$, cette deuxième partie étant composée des bits de poids p à (p+s-1) de l'adresse de l'instruction courante.

Une quatrième application du générateur d'adresses pour la mémoire de données d'un processeur concerne l'adressage circulaire modulaire d'une donnée affectée de cette adresse de donnée au cours de la répétition d'une boucle de $2^p$ instructions r fois, la deuxième partie de l'adresse de donnée étant le produit d'un nombre $2^q$ et du nombre d'exécutions de cette boucle déjà effectuées modulo un nombre déterminé $2^s$, q étant inférieur à p, r étant le produit d'un nombre entier u et de $2^s$, cette deuxième partie étant composée des bits de poids (p-q) à (p-q+s-1) de l'adresse de l'instruction courante.

Les différents objets et caractéristiques de la présente invention apparaîtront avec plus de détails dans le cadre de la description d'exemples de réalisation donnés à titre non limitatif en se référant aux figures annexées qui représentent :

- la figure 1, un schéma d'un processeur connu dans lequel figure le générateur d'adresses de l'invention
- la figure 2, un schéma d'un mode de réalisation du générateur d'adresses de l'invention.

Les éléments présents dans les deux figures porteront un seule référence.

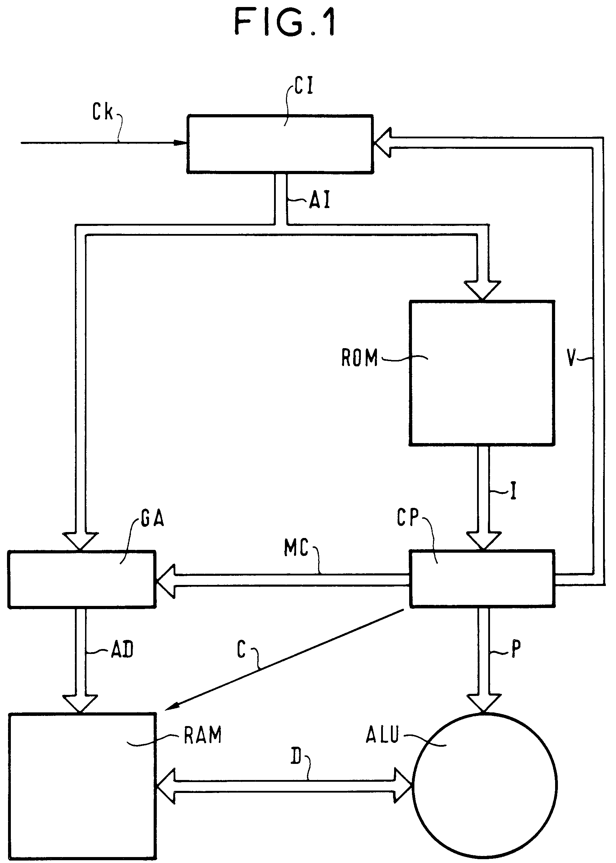

Le générateur d'adresse de l'invention sera maintenant présenté dans le cadre d'un processeur de structure connue représenté à la figure 1 et comprenant les différents organes suivants.

Un compteur d'instructions CI délivre comme signal de sortie une adresse d'instruction qui s'accroît d'une unité à chaque impulsion d'un signal d'horloge Ck. Ce compteur est par ailleurs initialisé par un contrôleur de programme CP décrit ci-dessous.

Une mémoire de programme ROM produit l'instruction I qui figure à l'emplacement identifié par l'adresse d'instruction issue du compteur d'instructions.

Le contrôleur de programme CP reçoit l'instruction I et a donc la possibilité d'imposer une valeur de départ V au compteur d'instructions CI. Il fournit par ailleurs un signal de programme P à une unité arithmétique et logique ALU, un signal de contrôle C à une mémoire de données RAM associée à cette unité et un mot de commande MC au générateur d'adresse GA.

L'unité arithmétique et logique ALU écrit ou lit une donnée D dans un emplacement de la mémoire de donnée RAM identifié par une adresse de données AD.

Le générateur d'adresses GA produit cette adresse de données AD. De manière connue, il reçoit le mot de commande MC du contrôleur de programme CP et, de plus, selon l'invention, il reçoit l'adresse d'instruction AI.

Le mot de commande MC est composé d'une information d'emplacement IE qui a le même format qu'une adresse de donnée et d'une information de sélection IS destinée à commander le générateur d'adresse. Il a donc la même structure que celle d'un mot de commande que produirait le contrôleur de programme en dehors de l'invention pour un adressage de type direct. Le contrôleur n'est donc pas modifié.

L'adresse de donnée AD est produite à partir de l'information d'emplacement par substitution de certains de ses bits par des bits de l'adresse d'instruction. Cette opération est spécifiée par l'information de sélection IS qui précise pour chacun des bits concernés de l'information d'emplacement par quel bit de l'adresse d'instruction il est remplacé. Le générateur d'adresses permet donc deux modes d'adressage :

- un mode d'adressage direct dans lequel l'adresse de donnée est l'information d'emplacement, l'information de sélection ne déclenchant aucune substitution,
- un mode d'adressage calculé dans lequel l'adresse de donnée est une combinaison des bits de l'information d'emplacement et de l'adresse d'instruction.

Un mode de réalisation particulier du générateur d'adresses GA sera maintenant présenté à titre d'exemple non limitatif.

L'adresse de donnée est ici décomposée en deux parties :

- une première partie comprenant les bits de poids fort, chacun de ces bits étant égal au bit de même poids de l'information d'emplacement,
- une deuxième partie comprenant les bits de poids faible qui est une suite de bits consécutifs de l'adresse d'instruction.

L'information de sélection IS se présente ici comme la réunion d'un code d'étendue et d'un code opératoire. Le code d'étendue précise le nombre e de bits de la deuxième partie tandis que le code opératoire précise le rang du premier bit de l'adresse d'instruction qui sera le bit de poids faible de l'adresse de données.

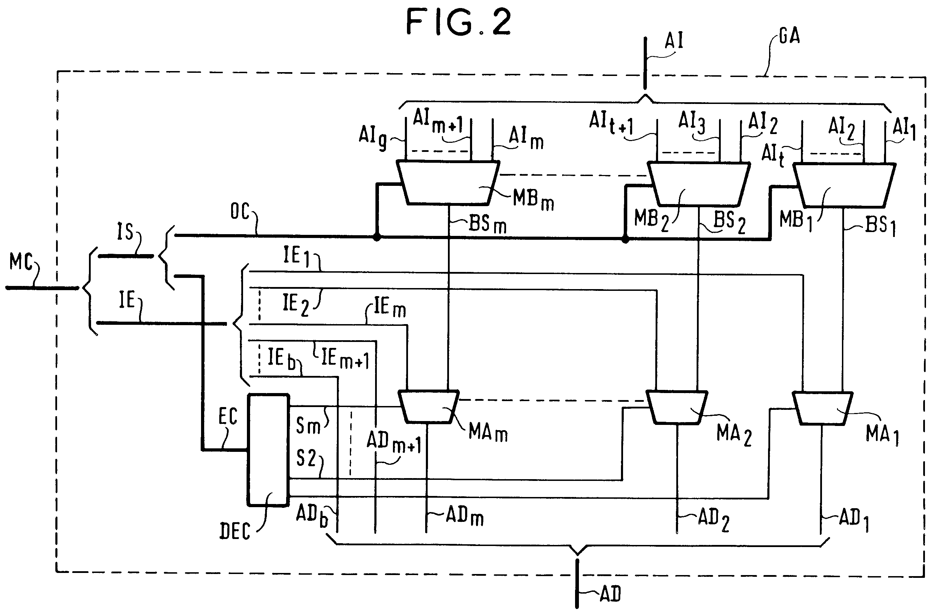

Le générateur d'adresse prendra la forme, par exemple, du circuit réprésenté à la figure 2.

Selon une convention couramment reconnue, les poids des bits d'un mot seront numérotés à partir de zéro. L'adresse de données AD est composée de b bits $AD_1$ à $AD_b$ où l'indice représente le poids du bit, augmenté d'une unité. Les m premiers bits de cette adresse sont fournis par un premier groupe de m multiplexeurs référencés $MA_1$ à $MA_m$, tandis que les bits de poids supérieur à m sont les bits de l'information d'emplacement de même poids.

Le générateur d'adresse comprend un organe de décodage DEC qui, à partir du code d'étendue EC produit m signaux de sélection $S_1$ à $S_m$, de sorte qu'ils soient dans un premier état si leur indice est supérieur au nombre e de bits de la deuxième partie de l'adresse de données et dans un deuxième état si leur indice est inférieur ou égal à e. Le nombre e est nécessairement inférieur ou égal au nombre m. A titre d'exemple numérique, le deuxième signal de sélection $S_2$ sera dans un premier état si e est supérieur à 2 et dans un deuxième état si e vaut 0 ou 1, ou 2. Cet organe de décodage se justifie uniquement si e est variable c'est-à-dire s'il peut prendre des valeurs différentes de O et m. Si tel n'est pas le cas, tous les signaux de sélection ont la même valeur pour un état quelconque du code d'étendue et se confondent donc en un signal de sélection unique.

Le générateur d'adresse comprend donc un premier groupe de multiplexeurs $MA_1,...,MA_m$. Le premier $MA_1$ de ces multiplexeurs produit le premier bit d'adresse de données $AD_1$ qui vaut le premier bit $IE_1$ de l'information d'emplacement IE appliqué sur sa première entrée ou un premier bit sélectionné $BS_1$ parmi ceux de l'adresse d'instruction AI appliqué sur sa deuxième entrée selon que le premier signal de sélection $S_1$ est respectivement dans son premier ou dans son deuxième état. Le deuxième $MA_2$ de ces multiplexeurs produit le deuxième bit $AD_2$ de l'adresse de donnée qui vaut le deuxième bit $IE_2$ de l'information d'emplacement IE appliqué sur sa première entrée ou un deuxième bit sélectionné $BS_2$ parmi ceux de l'adresse d'instruction AI appliqué sur sa deuxième entrée selon que le deuxième signal de sélection $S_2$ est respectivement dans son premier ou dans son deuxième état. Les caractéristiques des autres multiplexeurs se déduisent aisément de celle des deux premiers par itération. Ainsi, pour adopter une formulation générale, le nième $MA_n$ de ces multiplexeurs, où n est compris entre et 1 et m, produit le nième bit $AD_n$ de l'adresse de donnée qui vaut le nième bit $IE_n$ de l'information d'emplacement IE appliqué sur sa première entrée ou un nième bit sélectionné $BS_n$ parmi ceux de l'adresse d'instruction AI selon que le nième signal de sélection $S_n$ est respectivement dans son premier ou dans son deuxième état.

Dans une première forme de l'invention qui ne correspond pas à la figure 2, les bits sélectionnés $BS_1,...,BS_m$, de l'adresse d'instruction sont des bits déterminés de cette adresse.

Selon une caractéristique additionnelle de l'invention qui elle, est représentée à la figure 2, chacun de ces bits sélectionnés peut prendre, sur commande, la valeur d'un parmi plusieurs bits de l'adresse instruction, comme cela sera maintenant exposé.

Un ensemble d'indexation est formé à partir de tout ou partie des bits de l'adresse d'instruction AI. Ces bits sont référencés par les lettres AI suivi d'un indice compris entre 1 et g qui précise leur numéro d'ordre dans l'ensemble d'indexation. Une solution avantageuse consiste à choisir pour un bit d'indice donné le bit de poids inférieur d'une unité à cet indice dans l'adresse d'instruction AI. Cette solution donnée à titre d'exemple n'est évidemment pas la seule possible.

Le générateur d'adresses comprend un deuxième groupe de multiplexeurs à t entrées $MB_1$ à $MB_m$ en même nombre que ceux du premier groupe. Le premier $MB_1$ de ces multiplexeurs produit le premier bit sélectionné $BS_1$ comme celui appliqué sur son entrée de rang f en réponse au code opératoire OC qui précise ce rang f. Il reçoit sur sa première entrée le premier bit $AI_1$ de l'ensemble d'indexation, sur sa deuxième entrée le deuxième bit $AI_2$ de cet ensemble, et ainsi de suite jusqu'à son entrée de rang t qui reçoit le bit de rang t $AI_t$ de ce même ensemble.

Le deuxième de ces multiplexeurs $MB_2$, produit le deuxième bit sélectionné $BS_2$ tout comme le précédent, comme celui appliqué sur son entrée de rang f. Il reçoit sur chacune de ses entrées le bit de l'ensemble d'indexation dont le rang est supérieur d'une unité à celui de l'entrée considérée, donc sa première entrée reçoit le deuxième bit $AI_2$ de cet ensemble, sa deuxième entrée reçoit le troisième bit $AI_3$ de cet exemple et ainsi de suite jusqu'à son entrée de rang t qui reçoit le bit de rang $(t+1)$ $AI_{t+1}$ de ce même ensemble. Les caractéristiques des autres multiplexeurs se déduisent aisément de celles des deux premiers par itération.

Ainsi, pour adopter une formulation générale, le nième multiplexeur $MB_n$ reçoit sur son entrée de rang k le bit de rang $(n+k-1)$ de l'ensemble d'indexation quel que soit k compris entre 1 et t, et produit le nième bit sélectionné $BS_n$ comme celui appliqué sur son entrée de rang f en réponse au code opératoire OC. On s'aperçoit que le nombre g de bits de l'ensemble d'indexation est la somme du nombre m de multiplexeurs et du nombre t d'entrées de chacun de ces multiplexeurs.

La structure du générateur d'adresse étant décrite, plusieurs applications possibles de ce générateur seront maintenant présentées.

Une première application permet l'adressage direct de la mémoire de données RAM, comme cela a déjà été précisé. En effet le contrôleur de programme produira le code d'étendue EC de sorte que le nombre e soit nul, ce qui réduit la deuxième partie de l'adresse de données à néant, cette adresse AD étant alors égale à l'information d'emplacement IE.

Le générateur peut également être utilisé de manière avantageuse pour adresser la mémoire de données RAM dans le cadre de l'exécution d'un boucle d'instructions. Trois cas particuliers seront successivement détaillés, l'adressage incrémentiel, l'adressage modulaire et l'adressage circulaire qui concernent le cas où cette boucle comprend un nombre d'instructions qui est une puissance de 2, soit $2^p$.

Cette boucle débute avec l'initialisation du compteur d'instructions CI à la valeur de départ V. L'adresse d'instruction AI progresse d'une unité à chaque nouvelle instruction.

L'adressage incrémentiel consiste à augmenter l'adresse de données AD d'une unité à chaque exécution de la boucle d'instruction. A cet effet, le contrôleur de programme CP produira le code opératoire OC pour que tous les multiplexeurs $MB_1,...,MB_m$ du deuxième groupe sélectionnent leur entrée de rang p. Les bits de poids fort de l'adresse de donnée AD sont ceux de l'information d'emplacement, tandis que ses bits de poids faibles sont une suite de bits de poids supérieur ou égal à p de l'adresse d'instruction AI.

Le contrôleur de programme CP précise également dans le code d'étendue EC combien de bits comprend cette suite.

L'adressage modulaire consiste à augmenter l'adresse de donnée d'un nombre qui est une puissance de 2, $2^q$ à chaque exécution de la boucle, où q est inférieur à p. A cet effet le contrôleur de programmme CP produira le code opératoire OC pour que tous les multiplexeurs $MB_1,...,MB_m$ du deuxième groupe sélectionnent leurs entrées de rang (p-q). Les bits de poids fort de l'adresse de donnée AD sont ceux de l'information d'emplacement tandis que ses bits de poids faible sont une suite de bits de poids supérieur ou égal à (p-q) de l'adresse d'instruction AI. Le contrôleur de programme CP précise également dans le code d'étendue EC combien de bits comprend cette suite.

L'adressage circulaire est une variante soit de l'adressage incrémentiel soit de l'adressage modulaire.

L'adressage circulaire incrémentiel s'applique lorsque la boucle est répétée un nombre r de fois, r étant le produit d'un nombre entier u et d'un nombre qui est une puissance de 2, $2^s$. Lors des $2^s$ premières exécutions de la bouche, l'adresse de donnée AD est augmentée d'une unité à chaque exécution. Lors des $2^s$ exécutions suivantes, l'adresse de donnée AD prend à chaque exécution la valeur qu'elle avait $2^s$ exécutions avant. Et ainsi de suite jusqu'à réalisation complète des r exécutions. En d'autres termes, la deuxième partie de l'adresse de donnée est égale au nombre d'exécutions déjà effectués modulo $2^s$. A cet effet, le contrôleur de programme CP produit le code opératoire OC pour que tous les multiplexeurs $MB_1,...,MB_m$ du deuxième groupe sélectionnent leur entrée de rang p, et le code d'étendue EC afin que les s premiers multiplexeurs $MA_1,...,MA_s$ du premier groupe transmettent les bits sélectionnés $BS_1,...,BS_s$ et que les autres multiplexeurs de ce premier groupe transmettent les bits correspondants de l'information d'emplacement IE.

L'adressage circulaire modulaire s'applique également lorsque la bouche est répétée un nombre r de fois, r étant le produit d'un nombre entier u et d'un nombre qui est une puissance de 2, $2^s$.

Cependant, lors des $2^s$ premières exécutions de la boucle, l'adresse de donnée AD est augmentée d'un nombre qui est une puissance de 2, $2^q$ à chaque exécution. Lors des $2^s$ exécutions suivantes, l'adresse de donnée AD prend à chaque exécution la valeur qu'elle avait $2^s$ exécutions avant, et ainsi de suite jusqu'à réalisation complète des r exécutions. En d'autres termes la deuxième partie de l'adresse de donnée est égale au produit du nombre d'exécutions déjà effectuées et de $2^q$ modulo $2^s$.

A cet effet le contrôleur de programme CP produit le code opératoire OC pour que tous les multiplexeurs $MB_1,...,MB_m$ du deuxième groupe sé-

lectionnent leurs entrées de rang (p-q), et le code d'étendue EC afin que les s premiers multiplexeurs $MA_1,...,MA_s$ du premier groupe transmettent les bits sélectionnés $BS_1,...,BS_s$ et que les autres multiplexeurs de ce premier groupe transmettent les bits correspondants de l'information d'emplacement IE.

Une application du présent générateur d'adresses sera maintenant exposée afin d'illustrer certaines de ces possibilités.

Le processeur reçoit des couples d'échantillons numériques A(i), B(i) ou i est un entier qui prend successivement toutes les valeurs comprises entre 1 et 160.

Il doit effectuer les valeurs moyennes de ces échantillons sur seize valeurs successives, soit, si l'on note $\overline{A}$ valeur moyenne de A :

$$\overline{A}(j) = \sum_{k=1}^{16} A(16.j + k)$$

$$\overline{B}(j) = \sum_{k=1}^{16} B(16.j+k)$$

pour j prenant toutes les valeurs entières entre 0 et 9, i étant égal à (16.j + k).

Il doit par ailleurs produire des échantillons corrigés Ac(i), Bc(i) obtenus par soustraction à A(i) et B(i) respectivement de Ao et de Bo :

Ac (i) = A (i) - Ao
Bc (i) = B (i) - Bo

L'ensemble des opérations que doit effectuer le processeur peut se traduire sous la forme d'une séquence d'instructions dans lesquelles selon une convention connue, le terme situé à gauche d'un signe égal identifie un registre de sortie d'un opérateur, additionneur ou un multiplieur par exemple, ou un emplacement de la mémoire de données où est enregistré le résultat de l'opération situé à droite de ce signe égal. Cette séquence d'instructions comprend deux boucles, boucle 1 et boucle 2 :

- Phase d'initialisation
- Bouche 1 : pour j = 0 à 9, faire
- Boucle 2 : pour k = 1 à 16, faire
- A(j) = A(j) + A(i)
- A(i) = A(i) - Ao
- B(j) = B(j) + B(i)
- B(i) = B(i) - Bo
- Fin bouche 2
- Fin bouche 1
  La mémoire de données comprend
- dans une première partie, les données A(j) rangées selon la j croissant à des emplacements identifiés par 10 adresses successives,
- dans une deuxième partie, les données B(j) rangées selon les j croissants à des emplacements identifiés par 10 adresses successives,
- dans une troisième partie, les données A(i), B(i) rangées alternativement selon les i croissants à des emplacements identifiés par 320 adresses successives de sorte que, quel que soit i, B(i) figure juste après A(i),
- dans une quatrième partie, les données Ao, Bo figurant à des emplacements quelconques.

Cette mémoire est accédée selon les modes suivants :
- adressage direct pour les données Ao, Bo,
- adressage incrémentiel pour les données A(j), B(j) :
  la deuxième partie de l'adresse de donnée AD comprend 4 bits, ce qui est spécifié par le code d'étendue EC, le bit de poids faible de cette adresse étant le bit de poids 6 du compteur d'instruction, ce qui est spécifié par le code opératoire OC, car la boucle 1 comprend $2^6$ instructions, et la première partie de cette adresse est fournie par l'information d'emplacement IE,
- adressage modulaire pour les données A(i), B(i) :
  la deuxième partie de l'adresse de données AD comprend 9 bits, le bit de poids faible de cette adresse étant le bit de poids 1 du compteur d'instructions et progressant donc de 2 unités à chaque exécution de la boucle 2 qui comprend $2^2$ instructions, et la première partie de cette adresse est fournie par l'information d'emplacement et peut, dans ce cas, être la même pour A(i) et B(i).

**Revendications**

1. Générateur d'adresses (GA) pour la mémoire de données (RAM) d'un processeur, recevant un mot de commande (MC) d'un contrôleur de programme (CP), ce contrôleur de programme recevant lui-même des instructions (I) provenant d'une mémoire de programme (ROM) adressée par un compteur d'instructions (CI) et produisant un signal de programme (P) à destination d'une unité arithmétique et logique (ALU), le dit compteur d'instructions étant incrémenté par un signal d'horloge (Ck) et initialisé par ledit contrôleur de programme, caractérisé en ce que, ledit mot de commande (MC) comprenant une information d'emplacements (IE) et une information de sélection (IS), il comprend des moyens pour produire une adresse de donnée (AD) composée d'une première partie comprenant des bits de ladite information d'emplacement (IE) et d'une deuxième partie formée d'un ensemble sélectionné de bits de l'adresse de l'instruction courante (AI) identifiés par ladite information de sélection (IS).

2. Générateur d'adresses pour la mémoire de données d'un processeur selon la revendication 1, caractérisé en ce que ladite information de sélection (IS) comprend un code d'étendue (EC) précisant le nombre variable e de bits de ladite deuxième partie.

3. Générateur d'adresses pour la mémoire de données d'un processeur selon la revendication 2, caractérisé en ce qu'il comprend un premier groupe de multiplexeurs $(MA_1,...,MA_m)$ recevant chacun sur sa première entrée un bit sélectionné de ladite information d'emplacement (IE) et sur sa deuxième entrée un bit sélectionné de ladite adresse de l'instruction courante (AI), le nième $(MA_n)$ desdits multiplexeurs, quel que soit n, étant positionné sur sa première entrée si n est supérieur à e ou sur sa deuxième entrée dans le cas contraire, ladite deuxième partie de l'adresse de donnée (AD) étant établie avec les signaux de sorties $(AD_1,..., AD_e)$ desdits multiplexeurs de rang inférieur ou égal à e, et ladite première partie de cette adresse étant établie à partir des bits non sélectionnés de ladite information d'emplacement (IE) et avec les signaux de sortie desdits multiplexeurs de rang supérieur à e.

4. Générateur d'adresses pour la mémoire de données d'un processeur selon la revendication 3, caractérisé en ce qu'il comprend un organe de décodage (DEC) produisant des signaux de sélection $(S_1,...,S_m)$ pour commander lesdits multiplexeurs $(MA_1,...,MA_m)$ à partir dudit code d'étendue (EC).

5. Générateur d'adresses pour la mémoire de données d'un processeur selon la revendication 3 ou 4, caractérisé en ce que, un ensemble d'indexation comprenant certains au moins des bits de ladite adresse de l'instruction courante (AI) affectés chacun d'un numéro d'ordre, ladite information de sélection (IS) comprend également un code opératoire (OC) précisant que ladite deuxième partie de l'adresse de données (AD) est composée des bits dudit ensemble d'indexation de numéro d'ordre supérieur ou égal à un nombre f.

6. Générateur d'adresses pour la mémoire de données d'un processeur selon la revendication 5, caractérisé en ce qu'il comprend un deuxième groupe de multiplexeurs $(MB_1,...,MB_m)$ dont le nième $(MB_n)$, quel que soit n, reçoit sur son entrée de rang k le bit de numéro d'ordre (n + k-1) dudit ensemble d'indexation, a sa sortie reliée à la deuxième entrée du nième multiplexeur $(MA_n)$ dudit premier groupe, tous les multiplexeurs dudit deuxième groupe étant positionnés sur leur entrée de rang f au moyen dudit code opératoire (OC).

7. Générateur d'adresses pour la mémoire de données d'un processeur selon l'une quelconque des revendications précédentes, caractérisé en ce que ladite deuxième partie de l'adresse de donnée (AD) représente les bits de poids faible de cette adresse.

8. Générateur d'adresses pour la mémoire de données d'un processeur selon l'une quelconque des revendications précédentes, caractérisé en ce que ladite deuxième partie de l'adresse de donnée (AD) est formée par des bits consécutifs de ladite adresse de l'instruction courante (AI).

9. Application du générateur d'adresses pour la mémoire de données d'un processeur selon l'une quelconque des revendications précédentes à l'adressage incrémentiel d'une donnée affectée de ladite adresse de données (AD) au cours de la répétition d'une partie de l'adresse de donnée (AD) étant incrémentée d'une unité à chaque exécution de ladite boucle, elle est composée de bits de poids supérieur ou égal à p de ladite adresse de l'instruction courante (AI).

10. Application du générateur d'adresses pour la mémoire de données d'un processeur selon l'une quelconque des revendications 1 à 8 à l'adressge modulaire d'une donnée affectée de ladite adresse de donnée (AD) au cours de la répétition d'une boucle de $2^p$ instructions, caractérisé en ce que, ladite deuxième partie de l'adresse de données (AD) étant incrémentée de $2^q$ unités à chaque exécution de ladite boucle, q étant inférieur à p, elle est composée de bits de poids supérieur ou égal à (p-q) de ladite adresse de l'instruction courante (AI).

11. Application du générateur d'adresses pour la mémoire de données d'un processeur selon l'une quelconque des revendications 1 à 8 à l'adressage circulaire incrémentiel d'une donnée affectée de ladite adresse de donnée (AD) au cours de la répétition d'une boucle de $2^p$

instructions r fois, caractérisé en ce que ladite deuxième partie de l'adresse de donnée (AD) étant égale au nombre d'exécutions déjà effectuées de ladite boucle modulo un nombre déterminé $2^s$, r étant le produit d'un nombre entier u et de $2^s$, cette deuxième partie est composée des bits de poids p à (p + s - 1) de ladite adresse de l'instruction courante (AI).

12. Application du générateur d'adresses pour la mémoire de données d'un processeur selon l'une quelconque des revendications 1 à 8 à l'adressage circulaire modulaire d'une donnée affectée de ladite adresse de donnée (AD) au cours de la répétition d'une boucle de $2^p$ instructions r fois, caractérisé en ce que ladite deuxième partie de l'adresse de donnée (AD) étant le produit d'un nombre $2^q$ et du nombre d'exécutions de ladite boucle déjà effectuées modulo un nombre déterminé $2^s$, q étant inférieur à p, r étant le produit d'un nombre entier u et de $2^s$, cette deuxième partie est composée des bits de poids (p-q) à (p-q+s-1) de ladite adresse de l'instruction courante (AI).

# FIG.1

# FIG.2

EP 0 476 592 A2